# EUROPÄISCHE PATENTANMELDUNG

(11) **EP 1 111 909 A1**
(43) Veröffentlichungstag der Anmeldung: **27.06.2001**
(21) Anmeldenummer: 00204611.8
(22) Anmeldetag: 20.12.2000
(51) Int. Cl.: H04N 5/217, H04N 3/15

(54) **Vorrichtung und Verfahren zur Darstellung eines aus mehreren Teilbereichen zusammengesetzten Bildes**

(30) Priorität: 23.12.1999 DE 19962283; 09.05.2000 DE 10022407
(71) Anmelder: Philips Corporate Intellectual Property GmbH, 52064 Aachen (DE); Koninklijke Philips Electronics N.V., 5621 BA Eindhoven (NL)
(72) Erfinder: Eck, Kai, Philips Corporate Int. Property GmbH, 52064 Aachen (DE); Luijendijk, Johannes Albert, 52064 Aachen (DE); Jung, Norbert, Prof. Dr., 52064 Aachen (DE)
(74) Vertreter: Volmer, Georg, Dipl.-Ing.

(57) **Zusammenfassung**

Die Erfindung betrifft ein Verfahren und eine Vorrichtung zur Darstellung eines aus mehreren Teilbereichen zusammengesetzten Bildes , bei dem jedem Teilbereich (T₁ bis T_{N}) eine Ausleseeinheit (V₁ bis V_{N}) zugeordnet ist, und bei dem zur Angleichung von Unterschieden in Verstärkungscharakteristika Bilddaten aneinandergrenzender Bildgebiete (S₆₃, S₆₄, S₆₅, S₆₆) benachbarter Teilbereiche (T₁ und T₂) ausgewertet werden, mit einem mehrere Sensorelemente enthaltenden Detektor (11) zur Erzeugung von Bilddaten, einer Analyseeinheit (12), die zur Auswertung von Bilddaten aneinandergrenzender Bildgebiete benachbarter Teilbereiche und zur Erzeugung von Korrekturdaten vorgesehen ist, einer Korrektureinheit (13), die zur Korrektur von mit Fehlern behafteten Bilddaten mittels Korrekturdaten vorgesehen ist, mit der eine regelmäßige und akkurate Rekalibration oder Korrektur nichtlinearen Verstärkerverhaltens ohne zusätzliche Röntgenstrahlendosis oder Eingriffe des Benutzers durchgeführt werden kann.

## Beschreibung

Die Erfindung betrifft eine Vorrichtung zur Darstellung eines aus mehreren Teilbereichen zusammengesetzten Bildes mit einem mehrere Sensorelemente enthaltenen Detektor zur Erzeugung von Bilddaten und den Teilbereichen des Bildes zugeordneten Ausleseeinheiten. Zudem betrifft die Erfindung ein Verfahren zur Darstellung eines aus mehreren Teilbereichen zusammengesetzten Bildes, wobei jedem Teilbereich eine Ausleseeinheit zugeordnet ist und bei dem zur Angleichung von Unterschieden in Verstärkungscharakteristika Bilddaten aneinandergrenzender Bildgebiete benachbarter Teilbereiche ausgewertet werden. Darüber hinaus betrifft die Erfindung ein Röntgenuntersuchungsgerät zur Durchführung des erfindungsgemäßen Verfahrens mit einer Röntgenstrahlungsquelle und einer Detektoreinrichtung mit einer entsprechenden Vorrichtung zur Durchführung des Verfahrens. Außerdem betrifft die Erfindung ein Computerprogramm zur Korrektur von Bilddaten eines aus mehreren Teilbereichen zusammengesetzten Bildes.

Derartige Vorrichtungen und Verfahren werden im Bereich der Medizintechnik zum Beispiel in Bildgenerationsvorrichtungen von Röntgen- oder anderen Strahlungsuntersuchungseinrichtungen eingesetzt.

In der WO 96/19893 wird ein Bildaufnahmegerät beschrieben, bei dem ein Bildsignal in mehrere Teilbilder zerlegt wird. Dabei wird das Bildsignal in zwei Teilbilder zerlegt, die jeweils Detektorfeldern zugeführt werden. In einer Kombinationseinheit wird aus diesen Teilbildern wieder ein Gesamtbildsignal gebildet. Eine Korrektureinheit ist zur Korrektur von Unterschieden in den Teilbildern vorgesehen. Dazu werden Helligkeitswerte von Spalten eines ersten Teilbildes mit einem Spaltenverstärkungsfaktor und Helligkeitswerte von Zeilen eines zweiten Teilbildes mit einem Zeilenverstärkungsfaktor multipliziert. Die Verstärkungsfaktoren werden aus Referenzbildern gewonnen und in einem Speicher abgelegt.

Bei den meisten Anwendungsgebieten der eingangs genannten Verfahren und Vorrichtungen, insbesondere bei medizinischen Röntgendetektoren, aber auch bei Ultraschall-, Computer- oder Magnetresonanz-/Tomografiegeräten ist es sehr wichtig, dass die erzeugten Bilder weitgehend frei von Artefakten sind. Medizinische Bilder werden meist als Graustufenbilder angezeigt. Zur Erzeugung derartiger Graustufenbilder werden beispielsweise Röntgen- und Ultraschallgeräte oder Computer- oder Magnetresonanz -Tomo-graphiegeräte eingesetzt.

Die Erfindung gibt eine spezielle Vorrichtung zur Korrektur von mit Fehlern behafteten Bildern für einen flachen dynamischen Röntgendetektor an. Derartige Röntgendetektoren werden für Röntgenuntersuchungsgeräte im Bereich der medizinischen Diagnostik eingesetzt. Sie sind als universelle Detektorkomponenten in verschiedenen anwendungsspezifischen Röntgengeräten einsetzbar. Für ihren Betrieb in den verschiedenen Anwendungen ist es sehr wichtig, dass die erzeugten Bilder weitgehend frei von Artefakten sind. Dynamische Röntgendetektoren sind in mehrere Teilbereiche untergliedert, wobei für jeden Teilbereich je eine Ausleseeinheit benutzt wird. Jeder Teilbereich umfasst mehrere Bildgebiete. Die detektierten Signale oder Bilddaten eines Teilbereiches werden von einer Ausleseeinheit verstärkt, wobei eine Ausleseeinheit die mehreren Bildgebiete eines Teilbereiches ausliest. Die am Rand von aneinandergrenzenden Teilbereichen befindlichen benachbarten Bildgebiete werden demzufolge von unterschiedlichen Ausleseeinheiten ausgelesen. Ein diesen unterschiedlichen Ausleseeinheiten anhaftendes unterschiedliches Verstärkerverhalten wirkt sich durch abrupte Grauwertübergänge an diesen benachbarten Bildgebieten aus. Diese abrupten Grauwertübergänge stellen sich im darzustellenden Bild als Streifen dar. Durch Rauschunterdrückung oder Bildsubtraktion wird diese Beeinträchtigung noch verstärkt. Die beschriebenen Artefakte sind bei zunehmendem Rauschanteil schlechter sichtbar. Da das Auge eine integrative Eigenschaft aufweist, wird der effektiv vorhandene Rauschanteil unterdrückt und die Artefakte oder Fehler treten deutlich hervor. Bei einer zur Hervorhebung von Bildinhalten notwendigen Subtraktion werden zwei Bilder voneinander subtrahiert. Durch diese Subtraktion wird ein Unterschied in dem Verstärkerverhalten aneinandergrenzender Ausleseeinheiten besonders deutlich.

Mittels regelmäßiger Rekalibrationsprozesse und der Anwendung von in den Rekalibrationsprozessen gewonnenen Informationen über das nichtlineare Verstärkerverhalten benachbarter Ausleseeinheiten kann dieses unterschiedliche nichtlineare Verstärkerverhalten korrigiert werden. Jedoch erfordert eine derartige Rekalibration Eingriffe und Einweisungen des medizinischen oder technischen Personals.

Um eine Rekalibrierung vornehmen zu können wird eine vorgegebene Anzahl von Röntgenbelichtungen mit nachvollziehbaren Strahlendosen auf den Röntgendetektor angewendet. Auch mittels Abbildung spezieller Kalibrationsphantome lässt sich die Menge der Strahlendosis in jedem Detektorteilbereich ermitteln, so dass aus den auftretenden Differenzen in der Abbildung eine Abweichung der nichtlinearen Verstärkerkennlinien voneinander festgestellt werden kann.

Da dieses nichtlineare Verstärkerverhalten Veränderungen unterliegt, muss eine regelmäßige Korrektur angewendet werden. Die Veränderung kann nicht als fester Parameter über die Lebenszeit eines Bilderzeugungssystems betrachtet werden. Dieses nichtlineare Verstärkerverhalten kann durch Veränderungen der Detektorposition durch inhomogene Wärmeverluste hervorgerufen werden oder auch das Resultat von Alterung der Verstärkerschaltkreise sein.

Nachteilig bei den erwähnten regelmäßig durchzuführenden manuellen Korrekturen ist einerseits der Eingriff des Benutzerpersonals und andererseits die zusätzlich erforderlichen Röntgenbelichtungen, die für regelmäßige manuelle Korrekturen notwendig wären. Eine sich aus dieser manuellen Korrektur ergebende Anpassungstabelle mit Korrekturdaten, würde solange auf alle folgenden Bilddaten angewendet werden, bis eine erneute manuelle Korrektur durchgeführt wird. In der Zwischenzeit auftretende Veränderungen im Verstärkerverhalten werden somit nicht erfasst.

Aufgabe der Erfindung ist es deshalb, eine Vorrichtung und ein Verfahren anzugeben, mit denen eine regelmäßige und akkurate Rekalibration oder Korrektur nichtlinearen Verstärkerverhaltens ohne zusätzliche Röntgenstrahlendosis oder Eingriffe des Benutzers durchgeführt werden kann.

Diese Aufgabe wird durch eine Vorrichtung zur Darstellung eines aus mehreren Teilbereichen zusammengesetzten Bildes mit einem mehrere Sensorelemente enthaltende Detektor zur Erzeugung von Bilddaten, den Teilbereichen des Bildes zugeordnete Ausleseeinheiten, einer Analyseeinheit, die zur Auswertung von Bilddaten aneinandergrenzender Bildgebiete benachbarter Teilbereiche und zur Erzeugung von Korrekturdaten vorgesehen ist, und einer Korrektureinheit, die zur Korrektur von mit Fehlern behafteten Bilddaten mittels Korrekturdaten vorgesehen ist, gelöst.

Der Röntgendetektor setzt sich aus einer Matrix von Sensorelementen zusammen, die in Zeilen und Spalten angeordnet sind. Das von diesem Röntgendetektor erzeugte Bild lässt sich in Teilbereiche untergliedern, wobei jeder Teilbereich mehrere Bildgebiete umfasst und jedem Teilbereich eine Ausleseeinheit zugeordnet ist. Diese Ausleseeinheiten dienen der Verstärkung detektierter Bilddaten.

Die Ausleseeinheiten sind als Verstärker ausgeführt, wobei jeder dieser Verstärker die ihm zugeführten Bilddaten mit einer ihm anhaftenden nichtlinearen Verstärkungskennlinie verstärkt, was zu einer unterschiedlichen Verstärkung der Bilddaten führt.

Die Erfindung basiert auf dem Gedanken, dass die Bilddaten aneinandergrenzender Bildgebiete benachbarter Ausleseeinheiten keine abrupten Werteänderungen aufweisen. Vielmehr ist davon auszugehen, dass die Bilddaten benachbarter Bildgebiete annähernd die gleichen Werte annehmen. Im Umkehrschluss kann gefolgert werden, dass wenn eine sprunghafte Werteänderung auftritt, diese von Nichtlinearitäten herrührt.

Die Bilddaten medizinischer Bilder beinhalten weitestgehend Graustufenwerte. Ein Bildgebiet kann durch eine Bildspalte oder -zeile oder Teile davon gebildet werden und umfasst mehrere Bildpixel. Für die Graustufenwerte benachbarter Bildgebiete wird davon ausgegangen, dass sie gleiche Grauwertstufen aufweisen.

Auch für Farbbilder, bei den die Bilddaten durch einen Vektor, der die RGB-Anteile enthält, repräsentiert werden, kann von der Annahme ausgegangen werden, dass aneinandergrenzende Bildgebiete benachbarter Teilbereiche normalerweise gleiche Werte annehmen. Das gleiche gilt für Bilder die durch Amplituden- und Phasenwerte repräsentiert werden.

Um eine Korrektur von hoher Qualität zu erreichen, wird basierend auf der oben beschriebene Annahme ein Reihe von Ausnahmeregelungen getroffen. Paare von Graustufenwerten aneinandergrenzender Bildgebiete benachbarter Teilbereiche, deren Unterschied im Graustufenwert über einem vorgebbaren Schwellwert liegt, werden nicht in die Erzeugung der Korrekturdaten mit einbezogen, da eine hohe Wahrscheinlichkeit besteht, dass dieser Unterschied nicht vom dem nichtlinearen Verstärkerverhalten der benachbarten Ausleseeinheiten hervorgerufen wird. Desweiteren werden Bildgebiete, in denen mittels einer Vorverarbeitung eine Interpolation aufgrund von Pixelfehlern vorgenommen wurde, auch von der Erzeugung der Korrekturdaten ausgeschlossen. Bildgebiete, die in der unmittelbaren Nähe von Kollimatorblenden liegen, deren Position mittels eines Algorithmus berechnet wird, werden auch nicht für die Erzeugung der Korrekturdaten benutzt.

Die Graustufenwerte benachbarter Bildgebiete, die von unterschiedlichen Verstärkern verstärkt werden, werden in einer Analyseeinheit analysiert. In der Analyseeinheit werden mittels zugeführter Bilddaten aneinandergrenzender Bildgebiete benachbarter Ausleseeinheiten Korrekturdaten erzeugt. Diese Korrekturdaten werden in einer Korrektureinheit auf die mit Fehlern behafteten Bilddaten derart angewendet, dass die Bilddaten des beispielsweise rechten Teilbereiches, die mit der jeweiligen Verstärkungskennlinie verstärkt wurden, der ersten Verstärkungskennlinie des benachbarten linken Teilbereiches angeglichen werden. Dabei wird diese Korrektur auf alle zu diesem Teilbereich gehörenden Bildgebiete angewendet.

Die Korrektur oder Anpassung wird für alle Teilbereiche durchgeführt, so dass nach dieser Korrektur keine durch unterschiedliche nichtlineare Verstärkungskennlinien hervorgerufenen Bildfehler mehr auftreten.

Die Korrekturdaten werden vorzugshalber in einem Speicher abgelegt. Aus diesem können sie jederzeit aufgerufen werden und in der Korrektureinheit angewendet werden.
Die vom Detektor erzeugten Bilddaten werden der Analyseeinheit vorzugsweise nur mit verringerter Taktgeschwindigkeit zugeführt. Die Berechnung der Korrekturdaten erfordert je nach Genauigkeit entsprechende Rechenleistung, so dass beispielsweise nur jedes zweite Bild des Detektors der Analyseeinheit zugeführt wird. Die Genauigkeit der Korrektur wird durch diese Verzögerung nicht verschlechtert, da Änderungen im Verstärkungsverhalten der Ausleseeinheiten nicht in diesen Zeitrelationen auftreten, sondern nur über längere Zeiträume zu beobachten sind.

Die Analyseeinheit enthält einen Histogrammgenerator. Diesem Histogrammgenerator werden Bilddaten benachbarter Bildgebiete aneinandergrenzender Teilbereiche zugeführt.

Über das Auftreten der entsprechenden Graustufenwerte jedes der beiden betrachteten Bildgebiete wird je ein Histogramm gebildet. Je nach gewünschter Genauigkeit der Korrektur werden die Graustufenwerte in Klassen unterteilt. Dem Histogrammgenerator werden über einen bestimmten Zeitraum die jeweiligen Bilddaten zugeführt. Diese beiden Histogramme, in denen das Auftreten der entsprechenden Graustufenwerte der einzelnen Bildgebiete über die gesamte Breite der möglichen Graustufenwerte dargestellt wird, werden der Summationseinheit zugeführt.

In der Summationseinheit wird jeweils aus den im Histogrammgenerator erzeugten Histogrammen ein kumulatives Histogramm erzeugt. Die sich ergebenden kumulativen Histogramme weisen gegebenenfalls Unterschiede in ihrem Verlauf auf. Anhand dieser Unterschiede lässt sich auf ein unterschiedliches Verstärkerverhalten der die benachbarten Teilbereiche verstärkenden Ausleseeinheiten schließen.

In analytischer Betrachtungsweise werden vom Histogrammgenerator Dichtefunktionen gebildet, die in der Summationseinheit integriert werden, so dass hier die Verteilungsfunktionen aus den Dichtefunktionen gebildet werden.

In der Adaptionseinheit wird eine funktionelle Abhängigkeit der Bilddaten des zweiten Bildgebietes in Abhängigkeit von den Bilddaten des ersten Teilgebietes berechnet. Diese funktionelle Abhängigkeit wird in Form einer Gegenüberstellung korrespondierender Graustufenwerte in einer Anpassungstabelle niedergelegt. Die Korrekturdaten stellen den Inhalt der Anpassungstabelle dar, die von der Korrektureinheit auf die mit Fehlern behafteten Bilddaten angewendet werden.

Mittels dieser Anpassungstabelle werden in der Korrektureinheit die Bilddaten so korrigiert, dass nach dieser Korrektur Fehler oder Artefakte im Röntgenbild, die von einem unterschiedlichen Verstärkungsverhalten stammen, nicht mehr sichtbar sind.

Von einer Anzeigeeinheit wird ein, von derartigen Fehlern bereinigtes, medizinisches, beispielsweise der Diagnose dienendes Bild angezeigt.

Die Berechnung der Korrekturdaten in der Analyseeinheit ist nicht auf die Anwendung im Röntgenbereich gebunden, sie kann vielmehr in allen Bereichen der Signalverarbeitung eingesetzt werden, in denen zeitinvariantes nichtlineares Verstärkerverhalten auftritt.

Für die Erzeugung der Korrekturdaten können applikationsabhängig auch mehrere Bildgebiete der aneinander anzupassenden Teilbereiche verwendet werden, deren Dichtefunktionen oder Histogramme dann mittels geeigneter Operation miteinander verknüpft werden.

In einer weiteren vorteilhaften Ausgestaltung der Erfindung werden die an der Grenze liegenden Bildpixel betrachtet und für diese Bildpixel unter Verwendung der Bilddaten der angrenzenden Bildpixel des Nachbarteilbereichs Schätzwerte bzw. Sollwerte ermittelt. Diese Sollwerte geben an, welchen Wert der zu dem Bildpixel gehörige Bildwert aufweisen sollte, wenn die Ausleseeinheiten in etwa gleiche Verstärkerkennlinien aufweisen würden. Durch einen Vergleich des tatsächlichen Bildwerts der jeweiligen Bildpixel mit dem ermittelten Schätzwert wird so ein Korrekturwert ermittelt, der dazu dient, jeweils den auftretenden Bildwert in dem zu korrigierenden Teilbereich zu korrigieren.

Bei dem Korrekturwert kann es sich im einfachsten Fall um einen Korrekturfaktor handeln, welcher aus dem Verhältnis von Schätzwert und Bildwert gebildet wird. Dieser Korrekturwert kann für den jeweiligen Bildwert und für den zu korrigierenden Teilbereich in einer Anpassungstabelle bzw. einer sogenannten "Look-up-Tabelle" gespeichert werden.

Selbstverständlich ist es auch möglich, sofort das Produkt aus Bildwert und Korrekturwert, bzw. in dem eben genannten Fall den ermittelten Schätzwert selbst, in einer solchen Anpassungstabelle für den jeweiligen Bildwert zu hinterlegen.

Als Schätzwert kann im einfachsten Fall der Bildwert eines unmittelbar angrenzenden Bildpixels des benachbarten Teilbereichs verwendet werden. In diesem Fall wird davon ausgegangen, dass an der Grenze überhaupt keine Änderungen der Bildwerte von einem Teilbereich zum anderen auftreten. Eine solche Korrektur, die lediglich auf einem Vergleich einzelner Pixel auf jeder Seite eines Teilbereichübergangs beruht, ist nur wenig rechenintensiv und daher schnell und einfach durchzuführen. Sie hat jedoch den Nachteil, dass ein tatsächlich im Bild auftretender, über die Grenze verlaufender, leichter Gradient örtlich im Bereich des Grenzbereichs weggerechnet wird und dadurch wiederum ein Fehler erzeugt wird.

Bei einem weiteren bevorzugten Verfahren, welches solche Gradienten im Bereich der Grenze berücksichtigt, werden zur Ermittlung des Schätzwertes Bildwerte von Bildpixeln des angrenzenden Bildgebiets des benachbarten Teilbereichs über die Grenze hinweg extrapoliert. Der Begriff "angrenzendes Bildgebiet" ist daher beispielsweise bei einem zeilen- und spaltenmäßig aufgebauten Detektor nicht auf die direkt angrenzende Zeile bzw. Spalte des Nachbarteilbereichs beschränkt, sondern umfasst insoweit auch einen Verbund von mehreren Zeilen oder Spalten bzw. Teilen von Zeilen oder Spalten, wenn dieser Verbund insgesamt mit einer Seite an einen anderen Teilbereich angrenzt.

Im einfachsten Fall wird diese Interpolation nur über zwei quer zur Grenzlinie nebeneinanderliegende Bildpixel eines Teilbereichs durchgeführt. Selbstverständlich ist es aber auch möglich, eine solche Extrapolation über beliebig viele in einer Linie aneinanderangrenzende Bildpixel durchzuführen.

Bei einer besonders bevorzugten Ausführungsform wird dabei zunächst für den Bildwert eines Bildpixels des zu korrigierenden Teilbereichs ein erster Korrekturwert gebildet. Anschließend wird für einen unmittelbar an diesen Bildpixel des zu korrigierenden Teilbereichs angrenzenden Nachbarpixel des Nachbarteilbereichs unter Verwendung von Bildwerten des zu korrigierenden Teilbereichs ein Schätzwert für den Nachbarbildpixel ermittelt. Dies geschieht in gleicher Weise wie die Ermittlung des Schätzwerts für den Bildpixel des zu korrigierenden Teilbereichs selbst. Das heißt, es wird für den Bildpixel des zu korrigierenden Teilbereichs eine Extrapolation über die Werte der Bildpixel des Nachbarteilbereichs über die Grenze hinweg durchgeführt und umgekehrt dann zum Erhalt des Schätzwerts für den Nachbarbildpixel eine Extrapolation über die Bildwerte der Bildpixel des zu korrigierenden Teilbereichs. Durch einen Vergleich dieses Schätzwerts für den Nachbarbildpixel mit dem tatsächlichen Bildwert des Nachbarbildpixels wird dann ein zweiter Korrekturwert gebildet. Aus diesen beiden Korrekturwerten wird schließlich ein gemeinsamer Korrekturwert ermittelt, welcher auf die entsprechenden Bildwerte des zu korrigierenden Teilbereichs angewandt wird. Bei diesem gemeinsamen Korrekturwert kann es sich um den Mittelwert der beiden Korrekturwerte handeln. Eine weitere Möglichkeit besteht beispielsweise darin, einen gewichteten Mittelwert zu errechnen.

Das Abschätzverfahren kann im Prinzip für sämtliche entlang einer Grenze verlaufende Bildpixel durchgeführt werden. Hierbei ist davon auszugehen, dass viele der Bildpixel den gleichen Bildwert aufweisen. Sinnvollerweise wird dann aus den Korrekturwerten verschiedener Bildpixel des zu korrigierenden Teilbereichs, welche jeweils den gleichen Bildwert aufweisen, ein gemeinsamer Korrekturwert für diesen Bildwert in dem zu korrigierenden Teilbereich gebildet. Dies kann beispielsweise durch Bildung des Mittelwerts, des Modus oder des Medians geschehen.

Die ermittelten Korrekturwerte für die einzelnen Bildwerte der einzelnen Teilbereiche werden in einer Anpassungstabelle gespeichert und zur Korrektur aus dieser Anpassungstabelle abgerufen. Bei den Korrekturwerten kann es sich im Prinzip wiederum um Korrekturfaktoren handeln, die auf den jeweiligen Bildwert angewendet werden. Es kann sich aber selbstverständlich auch um bereits fertig korrigierte Werte handeln, durch die der jeweilige Bildwert einfach ersetzt wird.

Da nicht davon auszugehen ist, dass entlang einer Grenze eines Teilbereichs alle möglichen Bildwerte auftreten, werden beim Aufbau einer entsprechenden Anpassungstabelle für alle möglichen Bildwerte für einige der Bildwerte keine Daten in diesem Korrekturverfahren zur Verfügung gestellt. Es ist jedoch ohne weiteres möglich, die entstehenden Lücken durch Interpolationsverfahren zwischen den mit dem genannten Verfahren gefundenen Korrekturwerten aufzufüllen. Um den Rechenaufwand gering zu halten, reicht es unter Umständen sogar aus, nur für vereinzelte Bildwerte einen Korrekturfaktor direkt zu ermitteln und die restliche Tabelle mit geringem Rechenaufwand durch Interpolationsverfahren zu ermitteln.
Die Vorrichtung zur Durchführung des Verfahrens weist dementsprechend einen Speicher zur Speicherung einer solchen Anpassungstabelle auf. Mit Hilfe der in diesem Speicher gespeicherten Anpassungstabelle werden dann in einer Korrektureinheit jeweils die Bildwerte korrigiert, bevor sie auf einer Anzeigeeinheit dargestellt werden.

Im Prinzip ist es zwar möglich, bei entsprechender Verzögerung der Bilddaten auf dem Weg zur Korrektureinheit die mit einem bestimmten Bild ermittelten Korrekturwerte direkt auf dieses Bild anzuwenden. Zur Erhöhung der Arbeitsgeschwindigkeit ist es jedoch sinnvoll, die von vorhergehenden Bildern erzeugten Korrekturwerte bzw. eine daraus erzeugte Anpassungstabelle zu verwenden und diese Anpassungstabelle im Speicher jeweils mit den neuen Daten zu überprüfen bzw. zu korrigieren.

Hierbei kann beispielsweise ein gleitender Mittelwert über den Inhalt der aus verschiedenen nacheinander aufgenommenen Bildern gewonnenen Anpassungstabellen erzeugt werden. Das heißt, es werden jeweils die Korrekturwerte über die letzten Bilder gemittelt, wobei eine Wichtung bei der Mittelwertbildung sinnvoll ist. Dabei ist es vorteilhaft, einen neuen Satz von Korrekturwerten geringer zu wichten als den im Speicher vorhandenen Inhalt der Anpassungstabelle, welcher ja bereits aus einem Mittelwert der vorhergehenden Bilder gebildet ist. Auf diese Weise werden kurzzeitige Schwankungen, die ggf. auf andere Fehler zurückzuführen sein können, unterdrückt.

Da Änderungen im Verstärkungsverhalten der Ausleseeinheiten in der Regel nicht in Zeitrelationen auftreten, die den Abständen zwischen einzelnen Bildern einer Bildserie entsprechen, sondern eher über längere Zeiträume zu beobachten sind, ist es im Prinzip zur Reduzierung der Rechenleistung auch möglich, nur in bestimmten zeitlichen Abständen Bilder, beispielsweise nur jedes zweite oder dritte Bild, der Analyseeinrichtung zuzuführen und damit die Anpassungstabelle im Speicher zu überprüfen oder nachzukorrigieren.

Die Berechnung der Korrekturdaten mit dem genannten Verfahren ist nicht auf die Anwendung im Röntgenbereich festgelegt. Sie kann vielmehr in allen Bereichen der Signalverarbeitung eingesetzt werden, in denen ein zeitinvariantes, nichtlineares Verstärkerverhalten zwischen unterschiedlichen Bildbereichen eines gemeinsamen Bildes auftritt. Eine erfindungsgemäße Strahlungsuntersuchungseinrichtung, insbesondere Röntgenuntersuchungseinrichtung, weist eine Strahlungsquelle und eine Detektoreinrichtung auf. Die Detektoreinrichtung beinhaltet dabei einen Detektor mit mehreren Sensorelementen, wobei verschiedene der Sensorelemente zu Teilbereichen zusammengefasst sind und diese Teilbereiche jeweils eigene Ausleseeinheiten aufweisen. Weiterhin weist die Detektoreinrichtung eine Analyseeinheit zur Auswertung von Bilddaten aneinandergrenzender Bildgebiete der benachbarten Teilbereiche und zur Erzeugung von Korrekturdaten auf, wobei die Analyseeinheit Mittel zur Erzeugung des Schätzwerts nach dem erfindungsgemäßen Verfahren aufweist und Mittel zur Erzeugung eines Korrekturwerts unter Verwendung des Schätzwerts. Des weiteren beinhaltet die Detektoreinrichtung eine Korrektureinheit, die zur Korrektur von mit Fehlern behafteten Bilddaten mittels der gewonnenen Korrekturdaten dient.

Die Aufgabe wird auch durch ein Verfahren zur Darstellung eines aus mehreren Teilbereichen zusammengesetzten Bildes gelöst, wobei jedem Teilbereich eine Ausleseeinheit zugeordnet ist, bei der zur Angleichung von Unterschieden in Verstärkercharakteristika Bilddaten aneinandergrenzender Bildgebiete benachbarter Teilbereiche ausgewertet werden.

Die Aufgabe wird auch durch ein Röntgenuntersuchungsgerät gelöst, mit einer Röntgenquelle, um Röntgenstrahlen zu emittieren und ein Röntgenbild zu erzeugen einem Röntgendetektor, um ein optisches Bild aus dem Röntgenbild zu erhalten, der zeilen- und spaltenförmig angeordnete Sensorelemente enthält und dem wenigstens zwei Verstärker zum Auslesen detektierter Bilddaten zugeordnet sind und jedem Teilbereich wenigstens ein Verstärker zum Auslesen detektierter Bilddaten zugeordnet ist, einer Analyseeinheit zur Erzeugung von Korrekturdaten, basierend auf der Auswertung von Bilddaten aneinandergrenzender Teilgebiete benachbarter Verstärker und einer Korrektureinheit zur Korrektur der mit Fehlern behafteten Bilddaten mittels der Korrekturdaten.

Die Aufgabe wird ebenfalls durch ein Computerprogramm zur Korrektur von Bilddaten eines aus mehreren Teilbereichen zusammengesetzten Bildes gelöst, bei dem Teilbereichen des Bildes jeweils eine Ausleseeinheit zugeordnet ist und Bilddaten von Teilgebieten aneinandergrenzender Teilbereiche benachbarter Ausleseeinheiten mittels Histogrammbildung ausgewertet werden, um nach einer Integration der Histogramme Korrekturdaten zu erzeugen, mittels der die Bilddaten des einen Teilgebietes an die Verstärkercharakteristik der Ausleseeinheit, die das angrenzende Teilgebiet verstärkt, angepasst werden.

Weitere Einzelheiten und Vorteile der Erfindung ergeben sich aus den Unteransprüchen und der nachfolgenden Beschreibung, in der ein in den Figuren dargestelltes Ausführungsbeispiel der Erfindung näher erläutert wird. Es zeigen:
- Fig.1: schematischer Aufbau einer Vorrichtung zur Darstellung von Bildern
- Fig.2: Aufbau eines Detektors
- Fig.3: Dichtefunktionen von Bilddaten aneinandergrenzender Bildgebiete benachbarter Ausleseeinheiten
- Fig.4: Wahrscheinlichkeitsfunktionen der Bilddaten
- Fig.5: Adaption der Bilddaten
- Fig. 6: mit Fehlern behaftetes Röntgenbild
- Fig. 7: von Fehlern bereinigtes Röntgenbild
- Fig. 8: eine schematische Darstellung der Extrapolation zur Erhaltung eines Schätzwerts an einer Grenze zwischen zwei Teilbereichen;
- Fig. 9: einen schematischen Aufbau einer Vorrichtung zur Darstellung von Bildern;
- Fig. 10a: ein in mehrere Teilbereiche untergliedertes Bild eines Röntgendetektors, wobei jedem Bildpixel eines bestimmten Teilbereichs ein für den Teilbereich charakteristischer eindeutiger Grauwert zugeordnet ist;
- Fig. 10b: ein gestörtes Röntgenbild des Detektors gemäß Figur 10a;
- Fig. 10c: eine Darstellung der Anpassungstabelle in Form von Graustufenwerten zur Korrektur des Bildes gemäß Figur 10b;
- Fig. 10d: das in Figur 10b dargestellte gestörte Röntgenbild nach einer Korrektur mit einer Anpassungstabelle gemäß Figur 10c.

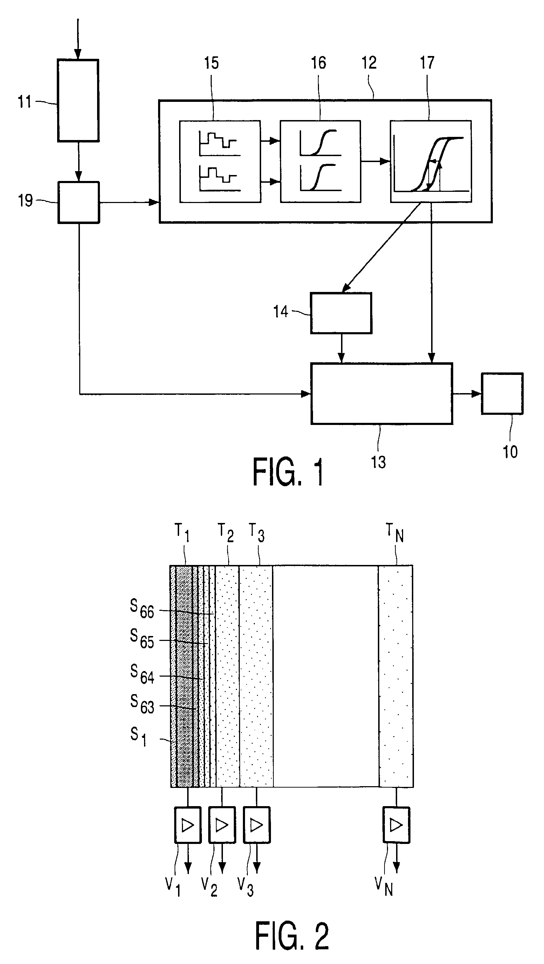

Figur 1 zeigt den Aufbau einer erfindungsgemäßen Vorrichtung. Der Detektor 11 erzeugt die Bilddaten die einer Vorverarbeitungseinheit 19 und von dort der Analyseeinheit 12 und der Korrektureinheit 13 zugeführt werden. In der Vorverarbeitungseinheit wird beispielsweise eine Offsetkorrektur vorgenommen. In der Analyseeinheit 12 wird aus den Bilddaten aneinandergrenzender Bildgebiete benachbarter Teilgebiete jeweils ein Histogramm im Histogrammgenerator 15 erzeugt. Diese Histogramme werden der Summationseinheit 16 zugeführt, in der aus diesen Histogrammen die kumulativen Histogramme gebildet werden. In der Adaptionseinheit 17 wird für jeden betrachteten Graustufenwert des einen Bildgebietes der korrespondierende Graustufenwert des anderen Bildgebietes berechnet. Anhand dieser Berechnung wird die funktionelle Abhängigkeit der betrachteten Bilddaten erzeugt. Die somit erzeugten Korrekturdaten werden direkt der Korrektureinheit 13 zugeführt und außerdem in jeweils aktuellster Form in einem Speicher 14 abgelegt. Die Bilddaten vom Detektor, die der Korrektureinheit 13 direkt zugeführt werden, werden jetzt mittels der Korrekturdaten in der Anpassungstabelle korrigiert und an die Anzeigeeinheit 10 übertragen, die nicht zwingend unmittelbar an dieser Vorrichtung angeordnet sein muss, sondern auch per Datennetz verbunden, sich an entfernten Stationen befinden kann.

Figur 2 zeigt schematisch den typischen Aufbau eines Röntgendetektors. Ein solcher Röntgendetektor wandelt ankommende Röntgenstrahlung in beispielsweise sichtbares Licht um, das von Fotosensoren detektiert und den Ausleseeinheiten zugeführt wird. Darüber hinaus gibt es auch Röntgendetektoren, die direkt die Röntgenstrahlung in elektrische Ladung umwandeln. Der gezeigte Detektor weist mehrere Teilbereich T₁ bis T_{N} auf, die jeweils mehrere Bildgebiete umfassen. In diesem Ausführungsbeispiel wird ein Bildgebiet durch eine oder mehrere nebeneinanderliegende Bildspalten, welche mehrere nebeneinanderliegenden Sensorelemente enthalten, dargestellt. Der Teilbereich T₁ enthält 64 Bildspalten S₁ bis S₆₄. Der daran angrenzende Teilbereich T₂ und alle folgenden Teilbereiche T₃ bis T_{N} enthalten ebenfalls jeweils 64 Bildspalten. Jedem Teilbereich T₁ bis T_{N} ist eine eigenen Ausleseeinheit zugeordnet, die hier jeweils als Verstärker V₁ bis V_{N} realisiert sind.

Die Bilddaten der aneinandergrenzenden Bildspalten S₆₄ und S₆₅, die von den Verstärkern V₁ und V₂ verstärkt werden, werden der Analyseeinheit und dort zuerst dem Histogrammgenerator 15 zugeführt.

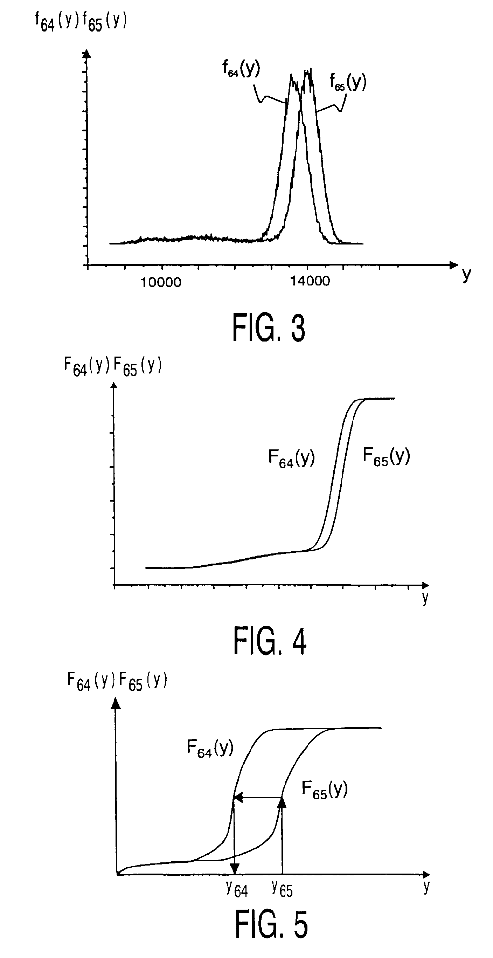

In Figur 3 sind die Histogramme der beiden betrachten Bildspalten S₆₄ und S₆₅ dargestellt. Hierbei ist deutlich sichtbar, dass für einen Graustufenwert um 13500 die Bilddaten der Bildspalte S₆₄ ein Maximum aufweisen und im Gegensatz dazu die Bilddaten der Bildspalte S₆₅ ihr Maximum bei y=14000 haben. Der Histogrammgenerator liefert mit dem Histogramm eine Zuordnung der Graustufenwerte in Graustufenklassen oder -bereiche, wobei die Häufigkeit des Auftretens eines Graustufenwertes in dem zugeführten Bilddaten des betrachteten Bildgebiet in der jeweiligen Klasse dargestellt wird.

Ausgehend von der Annahme, dass die Bilddaten aneinandergrenzender Bildspalten benachbarter Verstärker normalerweise gleiche Graustufenwerte aufweisen, liegt in dem betrachteten Fall ein Unterschied vor, der auf unterschiedliches Verstärkungsverhalten der Verstärker V₁ und V₂ schließen lässt. Bei gleichem Verstärkungsverhalten lägen die Funktionverläufe der Dichtefunktionen ƒ₆₄*(y)* und ƒ₆₅ *(y)* übereinander.

In Figur 4 ist der integrierte oder hier der summierte Verlauf der Dichtfunktionen ƒ₆₄ (y) und ƒ₆₅(*y*) aufgezeigt. Durch Zuführung der Dichtefunktionen ƒ₆₄(*y*) und ƒ₆₅(*y*) der Bildspalten S₆₄ und S₆₅ zur Summationseinheit werden die kumulativen Histogramme oder die Verteilungsfunktionen *F*₆₄ (*y*) und *F*₆₅(*y*) der Dichtefunktionen gebildet.

Diese zeigen den Verlauf der Summierung der absoluten Graustufenwerte und geben an, mit welcher Wahrscheinlichkeit ein Graustufenwert unter einem bestimmten Wert liegt.

In Figur 5 ist die Adaption dargestellt, die in der Adaptionseinheit 17 vorgenommen wird. Dazu wird für jeden Graustufenwert *y*₆₅ der Verteilungsfunktionswert F₆₅(y) aus den Verteilungsfunktion ermittelt (Schritt 1). Mit diesem Verteilungsfunktionswert F₆₅(y) wird der Verteilungsfunktionswert F₆₄(y) aufgefunden (Schritt 2). Zu diesem Verteilungsfunktionswert F₆₄(y) wird der Graustufenwert *y*₆₄ der Verteilungsfunktion F₆₄(y) ermittelt. Die so ermittelte Anpassungstabelle A(T₂→T₁) von Graustufenwerten *y*₆₅ auf Graustufenwerte *y*₆₄ stellt eine tabellarische Vorschrift zur Anpassung der Bilddaten des Teilbereichs T₂ an den Teilbereich T₁ dar.

Durch die wiederholte Anwendung dieser Adaptionsschritte auf je zwei benachbarte Teilbereiche werden Korrekturdaten gewonnen, die geeignet sind, jeweils diese zwei Teilbereiche bezüglich ihrer Verstärkungskennlinien aneinander anzupassen. Durch die Anwendung der Anpassungstabelle A(T₂→T₁) auf die Anpassungstabelle A(T₃→T₂) zur Anpassung des Teilbereichs T₃ auf den Teilbereich T₂ wir eine Anpassungstabelle A(T₃→T₁) für die Anpassung des Teilbereichs T₃ an den Teilbereich T₁ gewonnen.
Auf diese Art werden Anpassungstabellen für alle Verstärkungskennlinien der Teilbereiche T₁ bis T_{N} gewonnen, die direkt in der Korrektureinheit mit gleichem Zeitaufwand angewendet werden können.

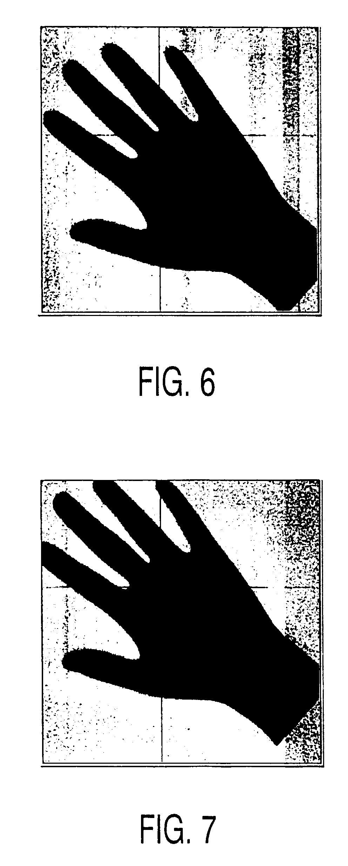

Figur 6 zeigt ein mit Streifenartefakten behaftetes Röntgenbild.
Figur 7 zeigt das nach Anwendung des erfindungsgemäßen Verfahrens korrigierte Röntgenbild.

Ein verwendeter flacher Röntgendetektor weist beispielsweise eine Fläche von 1024 x 1024 Sensorelementen auf. Jeder von diesem Röntgendetektor detektierte Graustufenwert wird mit 10 Bit kodiert. Die Bildwiederholfrequenz beträgt etwa 30 Bilder pro Sekunde. Daraus ergibt sich die Notwendigkeit, nicht jedes Einzelbild der Analyseeinheit zuzuführen, sondern beispielsweise nur jedes zweite. In der Analyseeinheit werden die Korrekturdaten der Anpassungstabellen berechnet, wobei für alle während diese Berechnung zu prozessierenden Einzelbilder mit der jeweils aktuellen Anpassungstabelle, die beispielsweise im Speicher abgelegt ist, korrigiert werden.

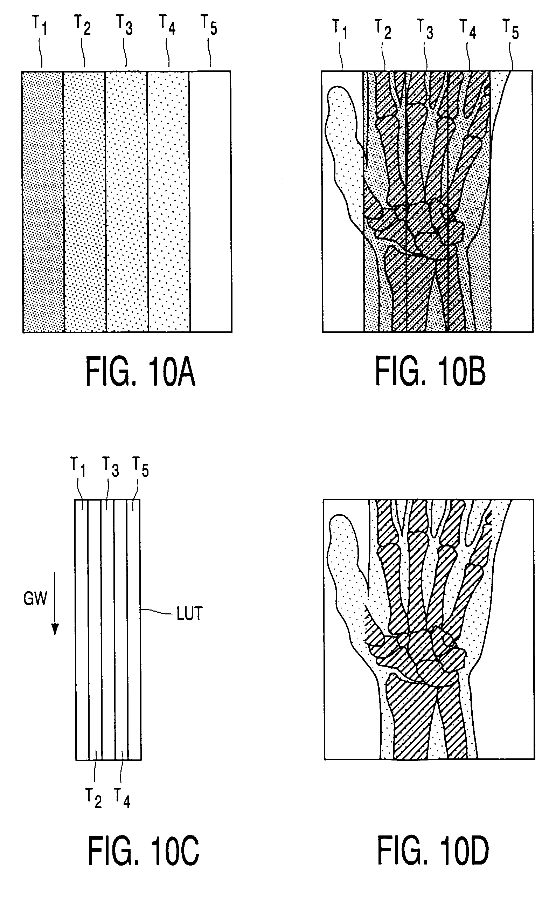

Figur 10a zeigt ein Bild eines realen Detektors mit 5 Teilbereichen T₁ bis T₅. Auch bei diesem Detektor hat jeder Teilbereich T₁ bis T₅ jeweils 64 Bildspalten. Um auf dem Bild eindeutig darzustellen, welches Bildpixel genau zu welchem Teilbereich T₁ bis T₅ gehört, das heißt, um die Grenzen G zwischen den Teilbereichen T₁ bis T₅ optisch herauszustellen, ist in diesem Bild jedem Bildpixel eines Teilbereichs T₁ bis T₅ ein bestimmter Grauscufenwert zugeordnet, der für den jeweiligen Teilbereich charakteristisch ist.
Da üblicherweise die Bilder von Röntgenanalyseeinrichtungen oder ähnlichen Geräten in Graustufenwerten dargestellt werden, wird im Folgenden auch von Graustufenwerten als Bildwerten ausgegangen. Selbstverständlich ist die Erfindung aber nicht auf solche Graustufenwerte begrenzt, sondern es kann sich auch um beliebige andere Bilddaten handeln, beispielsweise bei Farbbildern um Bilddaten, die durch einen Vektor, der die RGB-Anteile enthält, repräsentiert werden. Ebenso kann es sich um Bilder handeln, die durch Amplituden- und Phasenwerte repräsentiert werden.
Die in Figur 10a gezeigte Methode der Darstellung der Bildpixel, die zu einem bestimmten Verstärkungskanal gehören, mit einem bestimmten vorgegebenen Graustufenwert, ist insbesondere hilfreich, um bei kompliziert strukturierten Detektoren festzustellen, welcher Pixel zu welchem Verstärkungskanal gehört. Für die üblichen Detektoren, welche in einzelne Bildspalten gruppiert sind, wobei nebeneinanderliegende Bildspalten einer Ausleseeinheit zugeordnet werden, reicht es aus, wenn lediglich die horizontale Koordinate festgelegt wird, welche die Grenze zwischen zwei Teilbereichen bildet.

Figur 10b zeigt eine Aufnahme einer Hand mit dem Röntgendetektor gemäß Figur 10a. Es zeigt sich hier deutlich die störende Streifenbildung aufgrund des unterschiedlichen Verstärkungsverhaltens der Ausleseeinheiten der einzelnen Teilbereiche T₁ bis T₅.

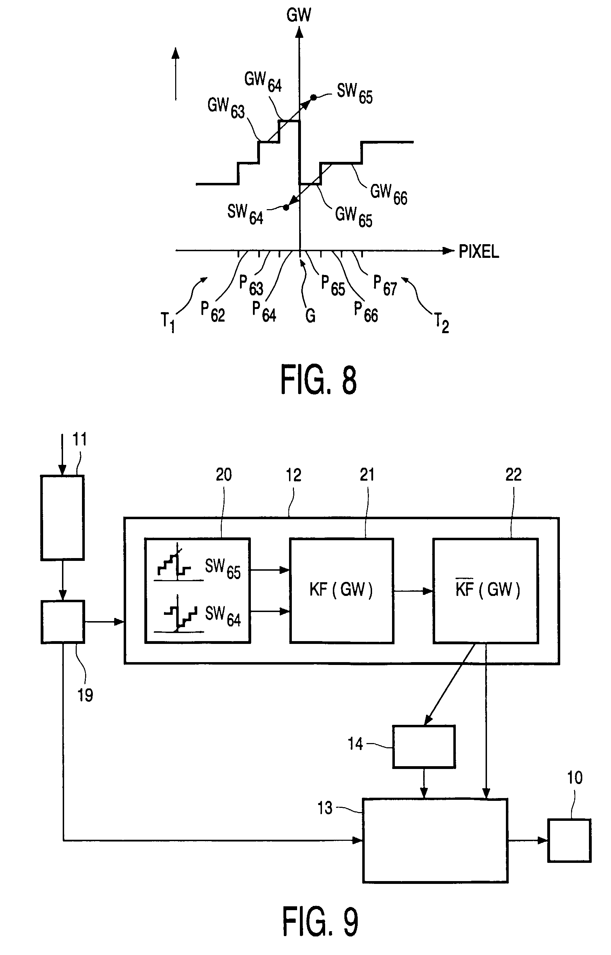

Figur 9 zeigt eine erfindungsgemäße Vorrichtung zur Vermeidung dieser Streifenbildung zu vermeiden. Hierbei wird das vom Detektor 11 erzeugte und in einer, z. B. eine OffsetKorrektur durchführenden, Vorverarbeitungseinheit 19 aufbereitete Bild einer Korrektureinheit 13 zugeführt. In dieser Korrektureinheit 13 werden die Bildwerte der einzelnen Bildpixel der einzelnen Teilbereiche jeweils so korrigiert, dass die Verstärkungskurven der Ausleseeinheiten V₁ bis V_{N} der einzelnen Teilbereiche T₁ bis T_{N} aneinander angeglichen sind. Das korrigierte Bild wird dann auf einer Anzeigeeinheit 10 dargestellt.

Um die Korrekturwerte für die Korrektur der Bilddaten zu erhalten, werden die Bilder aus der Vorverarbeitungseinheit 19 außerdem einer Analyseeinrichtung 12 zugeführt. In dieser Analyseeinrichtung 12 werden für die einzelnen Bildwerte GW eines bestimmten Teilbereichs T₁ bis T_{N} jeweils Korrekturfaktoren KF gebildet. Diese Korrekturfaktoren werden dann in einer Anpassungstabelle LUT in einem Speicher 14 hinterlegt, aus dem sie jederzeit zur Korrektur eines Bildes von der Korrektureinheit 13 aufgerufen werden können. Alternativ können natürlich von der Analyseeinrichtung 12 die Korrekturfaktoren KF auch direkt an die Korrektureinheit 13 übergeben werden.

Die Ermittlung der Korrekturfaktoren KF erfolgt in den dargestellten Ausführungsbeispiel wie in Figur 8 dargestellt. In dieser Figur sind jeweils die Graustufenwerte GW über den einzelnen Bildpixeln entlang einer Zeile des Detektors, das heißt senkrecht zu einer Grenze G zwischen zwei Teilbereichen T₁ bis T_{N} aufgetragen, wobei hier lediglich Ausschnittsweise die Pixel P₆₂ bis P₆₇ der letzten drei Bildspalten S₆₂ bis S₆₄ des ersten Teilbereichs T₁ und der ersten drei Bildspalten S₆₅ bis S₆₇ des zweiten Teilbereichs T₂ dargestellt sind.

Wie in Figur 8 gezeigt, hat der letzte Bildpixel P₆₄ des ersten Teilbereichs T₁ einen bestimmten Graustufenwert GW₆₄ und der unmittelbar an den Bildpixel P₆₄ angrenzende erste Bildpixel P₆₅ des zweiten Teilbereichs T₂ einen anderen Graustufenwert GW₆₅. Das heißt, der Graustufenwert verändert sich vom letzten Pixel P₆₄ des ersten Teilbereichs T₁ über die Grenze G zum ersten Pixel P₆₅ des zweiten Teilbereichs T₂ hin sprungartig.

Bei dem erfindungsgemäßen Korrekturverfahren wird davon ausgegangen, dass dieser Sprung auf die unterschiedlichen Verstärkungscharakteristiken der beiden Verstärker V₁ und V₂ zurückzuführen ist. Um die unterschiedlichen Verstärkungscharakteristiken auszugleichen, werden daher Korrekturwerte gesucht, mit welchen die Graustufenwerte des zweiten Teilbereichs T₂ an die Graustufenwerte des ersten Teilbereichs T₁ angepasst werden.

Hierzu wird zunächst für den Graustufenwert GW₆₅ des ersten Bildpixels P₆₅ des zweiten Teilbereichs T₂ ein Schätzwert SW₆₅ ermittelt. Die Ermittlung dieses Schätzwerts SW₆₅ erfolgt durch eine Extrapolation über die Graustufenwerte GW₆₃ und GW₆₄ der beiden Bildpixel P₆₃ und P₆₄ des ersten Teilbereichs T₁. Der Quotient aus dem Schätzwert SW₆₅ und dem tatsächlichen Graustufenwert GW₆₅ des Bildpixel P₆₅ ergibt dann einen Korrekturfaktor für alle Graustufenwerte im Teilbereich T₂, die dem Graustufenwert GW₆₅ des betrachteten Bildpixels P₆₅ entsprechen.

Um die Angleichung zu verbessern, wird im vorliegenden Ausführungsbeispiel auf gleiche Weise durch entsprechende Extrapolation an der Grenze G von der rechten Seite her, das heißt über die Grauwerte GW₆₅ und GW₆₆ der Bildpixel P₆₅ und P₆₆ ein Schätzwert SW₆₄ für den letzten Pixel P₆₄ des ersten Teilbereichs T₁ gebildet. Aus dem Verhältnis des tatsächlichen Grauwerts GW₆₄ zum Schätzwert SW₆₄ erhält man einen zweiten Korrekturfaktor, welcher im Idealfall dem ersten Korrekturfaktor entspricht. Über diese beiden Korrekturfaktoren kann ein Mittelwert gebildet werden, welcher letztendlich als der Korrekturwert herangezogen wird, der am Bildpixel P₆₅ ermittelt wurde.
Dieses Verfahren wird für alle Bildpixel der ersten Bildspalte S₆₅ des zweiten Teilbereichs T₂ durchgeführt. Hierbei werden in der Regel für einen bestimmten Graustufenwert GW mehrere Korrekturfaktoren ermittelt, da dieser Graustufenwert GW ggf. an mehreren Bildpixeln der Bildspalte S₆₅ anliegt. Diese Korrekturwerte für jeweils die gleichen Graustufenwerte werden akkumuliert und beispielsweise hierüber der Mittelwert gebildet. Selbstverständlich ist es ebenso möglich und ggf. sogar besser, aber auch rechenaufwendiger, andere Mittel zur Kombinierung der verschiedenen Korrekturwerte für ein- und denselben Graustufenwert eines Teilbereichs zu verwenden. Beispielsweise können alle Korrekturwerte für einen Graustufenwert in einem Histogramm eingetragen werden und dann der Modus oder der Median ermittelt werden. Auf diese Weise werden einzelne, statistisch beim Verfahren auftretende Fehler recht gut reduziert.

Diese Vorgehensweise ist ein weiteres Mal in der Figur 9 innerhalb der Analyseeinrichtung 12 dargestellt. In einer ersten Einheit 20 werden jeweils von rechts und links durch Extrapolation an einer Grenze G zwei Schätzwerte SW₆₅ und SW₆₄ gebildet. Aus diesen Schätzwerten SW₆₅ und SW₆₄ wird dann für einen bestimmten Graustufenwert GW in der Einheit 21 ein Korrekturfaktor KF (GW) ermittelt. In einer nachfolgenden Einheit 22 werden alle Korrekturfaktoren KF für einen bestimmten Graustufenwert GW gemittelt, um so den endgültigen Korrekturfaktor für diesen Graustufenwert GW zu erhalten. Die Analyseeinrichtung 12 der Speicher 14 und die Korrektureinheit 13 können dabei im Prinzip von einem gemeinsamen Rechner gebildet werden, wobei die einzelnen Einheiten 20, 21, 22 auch in Form einer geeigneten Software auf dem Rechner implementiert werden können.

Diese Prozedur zur Ermittlung der Korrekturfaktoren wird für jeden Teilbereich durchgeführt, wobei jeweils ein Teilbereich T₁ an den unmittelbar zuvorliegenden benachbarten Teilbereich Tᵢ₋₁ angeglichen wird. Das heißt, die Graustufenwerte des Teilbereichs T₂ werden an den Teilbereich T₁ angeglichen, die Graustufenwerte des Teilbereichs T₃ dann wiederum an den Teilbereich T₂ u.s.w. Auf diese Weise werden sämtliche Teilbereiche T₂ bis T_{N} sukzessive an den Teilbereich T₁ angeglichen.

Um für jeden Teilbereich T₂ bis T_{N} jeweils einen absoluten Korrekturwert, bezogen auf den ersten Teilbereich T₁, zu erhalten, müssen die relativen Korrekturwerte der einzelnen Teilbereiche T₁ (bezogen auf ihren vorhergehenden Nachbarteilbereich Tᵢ₋₁) jeweils mit den absoluten Korrekturwerten Tᵢ₋₁ des vorhergehenden Nachbarteilbereichs multipliziert werden.

Es wird noch einmal ausdrücklich erwähnt, dass mit diesem Algorithmus nicht die Nichtlinearität der einzelnen Verstärker beseitigt wird, sondern es werden lediglich die Nichtlinearitäten der Kanäle aneinander angepasst. Die so für jeden einzelnen Teilbereich T₁ bis T_{N} ermittelten Korrekturfaktoren für die einzelnen Graustufenwerte werden dann in einer Anpassungstabelle LUT im Speicher 14 hinterlegt.

Üblicherweise tauchen in den jeweils ersten Bildspalten eines Teilbereichs T₁ bis T_{N} nicht unbedingt sämtliche möglichen Graustufenwerte GW auf, da die meisten Detektoren mehrere 10.000 unterschiedliche Graustufenwerte aufweisen. Dic Anpassungstabelle kann dann für diese Graustufenwerte einfach leer bleiben, und es können Interpolationsverfahren genutzt werden, um die Werte aufzufüllen. Die Größe der Anpassungstabelle kann beispielsweise auch dadurch reduziert werden, dass die Korrekturwerte für mehrere Graustufenwerte in der Anpassungstabelle kombiniert werden. Das heißt, es werden mehrere Graustufenwerte zusammengefasst und mit einem gemeinsamen Korrekturfaktor versehen. Dies ist insbesondere dann sinnvoll, wenn die Unterschiede in der Nichtlinearität sich nur langsam mit dem Graustufenwert verändern.

Figur 10c zeigt eine Anpassungstabelle LUT für die fünf Teilbereiche T₁ bis T₅ des in den Figuren 10a und 10b dargestellten Detektors. Aufgetragen ist hierbei jeweils ein Graustufenwert als Korrekturfaktor, welcher den jeweils im Teilbereich auftretenden Graustufenwert ersetzt. Dabei nehmen in der gewählten Darstellung die zu ersetzenden Graustufenwerte GW für die Teilbereiche T₁ bis T₅ in der markierten Pfeilrichtung von oben nach unten zu. Die Anpassungstabelle LUT enthält hierbei für jeden Teilbereich T₁ bis T₅ nur einen einzelnen in Pfeilrichtung verlaufenden Vektor an Einträgen. Die Ausdehnung in der Breite erfolgt lediglich zur besseren Darstellung der unterschiedlichen Teilbereiche T₁ bis T₅. Wie deutlich zu sehen ist, sind im Teilbereich T₁ lediglich die Graustufenwerte selbst eingetragen. Das heißt, der Teilbereich T₁ wird quasi mit einem Korrekturfaktor 1,0 korrigiert, da sämtliche weiteren Teilbereiche T₂ bis T₅ an diesen ersten Teilbereich T₁ angepasst werden.
Figur 10d zeigt schließlich das Röntgenbild gemäß Figur 10b, nachdem die Korrekturwerte aus der Anpassungstabelle LUT gemäß Figur 10c auf die Bilddaten angewandt wurden. Es zeigt sich deutlich, dass die unerwünschten Streifen vollständig eliminiert wurden.

Im dargestellten Ausführungsbeispiel wurde zum Auffinden des Schätzwerts jeweils eine Extrapolation über zwei Pixel durchgeführt. Es versteht sich von selbst, dass auch eine Extrapolation über mehrere nebeneinanderliegende Bildpixel durchgeführt werden kann. Selbstverständlich ist es auch möglich, das Verfahren ohne eine solche Extrapolation durchzuführen. So kann beispielsweise im einfachsten Fall ein direkter Abgleich zwischen zwei benachbarten Pixeln durchgeführt werden. Das heißt, als Schätzwert für den Graustufenwert eines bestimmten Bildpixels in der ersten Bildspalte S₆₅ des zweiten Teilbereichs T₂ wird dann der Graustufenwert des benachbarten Bildpixels in der letzten Bildspalte S₆₄ des ersten Teilbereichs T₁ verwendet u.s.w.

Ebenso ist dieses Verfahren selbstverständlich nicht darauf beschränkt, auf Detektoren mit nur vertikal unterteilten Teilbereichen T₁ bis T_{N} angewandt zu werden. Es kann selbstverständlich auch für Detektoren verwendet werden, welche beispielsweise in mehrere vertikale Teilbereiche und zusätzlich in mehrere horizontale Teilbereiche unterteilt sind.

Um die Zuverlässigkeit des Verfahrens zu verbessern und Fehler aufgrund von natürlichen Abstufungen im Bild, die nicht mit der Grenze G zwischen zwei Teilbereichen T₁ bis T_{N} zusammenhängen, zu vermeiden, können mehrere Methoden verwendet werden, die auch kombiniert angewendet werden können:
1. Es werden nur Korrekturwerte von den Bildpixeln entlang einer Grenze berücksichtigt, bei denen die Korrekturwerte aufgrund der rechtsseitigen und linksseitigen Extrapolation nicht zu sehr voneinander abweichen.
2. Korrekturfaktoren, welche außerhalb eines bestimmten vorher festgelegten Korrekturfaktorbereichs liegen, werden nicht berücksichtigt.
3. Korrekturwerte, bei denen der Gradient des Graustufenwerts relativ zum Graustufenwert (das heißt, die Steigung des Gradienten) höher ist als ein zwischen den Teilbereichen festgelegter Maximalwerte (absoluter Grenzwert des Gradienten), bleiben unberücksichtigt.
4. Korrekturwerte, welche zu stark von den Korrekturwerten einer bereits zuvor ermittelten Anpassungstabelle abweichen, werden nicht berücksichtigt.
5. Über die nichtleeren Einträge in der Anpassungstabelle wird eine Glättungsoperation durchgeführt, um so nur geringe Änderungen der Korrekturfaktoren zu erlauben.
6. Alle Einträge der Anpassungstabelle werden herabgesetzt, sobald ein vorgegebener maximaler Abweichungswert überschritten wird. Diese Beschränkung hängt mit der maximalen

Nichtlinearitätsspezifikation der einzelnen Verstärkungskanäle zusammen und wird am besten anhand eines Beispiels deutlich. Wenn zum Beispiel der Korrekturfaktor innerhalb einer Anpassungstabelle eines bestimmten Teilbereichs bei einem niedrigen Graustufenwert 1,01 beträgt und bei einem hohen Graustufenwert 1,05 beträgt, so entspricht die Nichtinearität dieses einzelnen Teilbereichs verglichen mit dem benachbarten Teilbereich (1,05 - 1,01) x 100 % = 4 %. Wenn aufgrund der Spezifikation der Verstärker andererseits jedoch feststeht, dass die Nichtlinearität lediglich 0,5 % beträgt, so kann zwangsläufig die maximale Nichtlinearität zwischen zwei Kanälen maximal das doppelte der Nichtlinearität eines einzelnen Verstärkers, nämlich 1 %, betragen. In diesem Fall kann die in der Anpassungstabelle eingetragene Nichtlinearität von 4 % auf 1 % reduziert werden, in dem der gesamte Bereich durch 4 geteilt wird. Im Einzelnen wird hierzu, sofern es sich bei den Einträgen in der Anpassungstabelle um Korrekturfaktoren handelt, von jedem einzelnen Eintrag zunächst der Wert 1 abgezogen und anschließend der gesamte Mittelwert über alle Einträge ermittelt und dann die Abweichungen von dem Mittelwert durch den Faktor 4 geteilt. Es ist ersichtlich, dass eine solche Anpassung äußerst rechenintensiv ist.

Das Verfahren kann bei Einzelbildaufnahmen eingesetzt werden, indem die aus dem Bild ermittelten Korrekturwerte auf das Bild selbst angewandt werden. Es kann aber genauso gut auf eine Sequenz von aufeinanderfolgenden Bildern angewendet werden, wobei in diesem Fall Sinnvollerweise die Korrekturwerte aus einer Anpassungstabelle entnommen werden, die aus den Bilddaten der vorhergehenden Bilder gewonnen wird und die regelmäßig durch Korrekturwerte aus neu aufgenommenen Bildern kontrolliert und korrigiert wird.

Das Verfahren kann auf einen weiten Bereich von verschiedenen Bildaufnahmesystemen angewandt werden. Es dient vornehmlich dazu, die Sichtbarkeit der Differenzen von Nichtlinearitäten zwischen den Vorverstärkern bei flachen dynamischen Röntgendetektoren (FDXD) unsichtbar zu machen, ist aber nicht auf diese Anwendung beschränkt. Ein weiteres Beispiel eines Bildaufnahmesystems, in dem das Verfahren angewandt werden kann, ist der XTV16-Bildsensor. In diesem Detektor werden für die geraden und ungeraden Bildspalten verschiedene Sensoren und Vorverstärker verwendet. Da hierbei jeweils jeder Teilbereich nur aus einer einzelnen Spalte besteht, kann jedoch das Verfahren der Extrapolation über mehrere Pixel nicht verwendet werden, sondern es wird dann nur eine Angleichung durch einen Vergleich von benachbarten Pixeln durchgeführt. Auch bei einem solchen Vergleich von einzelnen Pixeln ohne eine Extrapolation lassen sich die meisten für das oben dargestellte Ausführungsbeispiel beschriebenen Verfahren zur Kombination verschiedener Korrekturwerte ein- und desselben Graustufenwerts und zur Verbesserung der Zuverlässigkeit durchführen.

Im Prinzip lässt sich das Verfahren sogar dafür nutzen, eine Abschattungskorrektur durchzuführen, indem ein Satz von konzentrischen Kreisen als unterschiedliche Teilbereiche des einzelnen ankommenden Bildes definiert wird.

## Patentansprüche

1. Vorrichtung zur Darstellung eines aus mehreren Teilbereichen (T₁ bis T_{N}) zusammengesetzten Bildes mit
- einem mehrere Sensorelemente enthaltende Detektor zur Erzeugung von Bilddaten
- den Teilbereichen (T₁ bis T_{N}) des Bildes zugeordnete Ausleseeinheiten (V₁ bis V_{N})
- einer Analyseeinheit (12) , die zur Auswertung von Bilddaten aneinandergrenzender Bildgebiete (S₆₃ bis S₆₆ ) benachbarter Teilbereiche (T₁ und T₂) und zur Erzeugung von Korrekturdaten vorgesehen ist
- einer Korrektureinheit (13), die zur Korrektur von mit Fehlern behafteten Bilddaten mittels Korrekturdaten vorgesehen ist.

2. Vorrichtung nach Anspruch 1,
dadurch gekennzeichnet,
dass der Detektor mehrere in Matrixform angeordnete Sensorelemente umfasst, die in Zeilen und Spalten untergliedert sind.

3. Vorrichtung nach Anspruch 1,
dadurch gekennzeichnet,
dass Zeilen oder Spalten oder Teile davon ein Bildgebiet und mehrere Bildgebiete einen Teilbereich bilden und Verstärker zum Auslesen von Teilbereichen vorgesehen sind.

4. Vorrichtung nach Anspruch 1,
gekennzeichnet durch,
einen Speicher (14) zur Speicherung einer aus den von der Analyseeinheit (12) erzeugten Korrekturdaten gebildeten Anpassungstabelle (LUT).

5. Vorrichtung nach Anspruch 1,
dadurch gekennzeichnet, dass der Analyseeinheit (12) die Bilddaten mit verringerter Geschwindigkeit zugeführt werden.

6. Vorrichtung nach Anspruch 1,
dadurch gekennzeichnet,
dass die Analyseeinheit (12) zur Zuführung von Bilddaten aneinandergrenzender Spalten benachbarter Verstärker vorgesehen ist und einen Histogrammgenerator (15) zur Erzeugung von Histogrammen der zugeführten Bilddaten enthält und eine Summationseinheit (16) zur Erzeugung von kumulativen Histogrammen aus den Histogrammen und eine Adaptionseinheit (17) zur Bildung einer funktionellen Abhängigkeit zwischen den Verstärkungskennlinien der Verstärker benachbarter Spalten und zur Erzeugung von Korrekturdaten angeordnet ist.

7. Vorrichtung nach Anspruch 6,
dadurch gekennzeichnet,
dass der Histogrammgenerator (15) zur Zuführung der Bilddaten und zur Erzeugung von Histogrammen über ein vorgebbares Zeitintervall vorgesehen ist.

8. Vorrichtung nach Anspruch 1,
dadurch gekennzeichnet,
dass die Analyseeinheit (12) Mittel (20) zur Erzeugung eines Schätzwerts (SW65) für den Bildwert (GW65) eines Bildpixels (P₆₅) eines zu korrigierenden Teilbereichs (T₂), wobei der Bildpixel (P₆₅) an einer Grenze (G) zu einem Nachbarteilbereich (T₁) liegt, unter Verwendung eines Bildwertes (GW64) des angrenzenden Bildgebiets (S64) des Nachbarteilbereichs (T1) und
Mittel (21, 22) zur Erzeugung eines Korrekturwerts für den jeweiligen Bildwert (GW65) in dem zu korrigierenden Teilbereich (T₂) durch einen Vergleich des tatsächlichen Bildwerts (SW₆₅) des Bildpixels (P₆₅) mit dem Schätzwert (SW₆₅) aufweist.

9. Vorrichtung nach Anspruch 8,
dadurch gekennzeichnet,
dass die Analyseeinheit Mittel (20) zur Extrapolation der Bildwerte (GW₆₃, GW₆₄) von Bildpixeln (P₆₃, P₆₄) eines an den Bildpixel (P₆₅) des zu korrigierenden Teilbereichs (T₂) angrenzenden Bildgebiets (S₆₃, S₆₄) des Nachbarteilbereichs (T₁) über die Grenze (G) hinweg aufweist.

10. Verfahren zur Darstellung eines aus mehreren Teilbereichen (T₁ bis T_{N}) zusammengesetzten Bildes, wobei jedem Teilbereich eine Ausleseeinheit (V₁ bis V_{N}) zugeordnet ist,
dadurch gekennzeichnet,
dass zur Angleichung von Unterschieden in Verstärkercharakteristika Bilddaten aneinandergrenzender Bildgebiete (S₆₃ bis S₆₆) benachbarter Teilbereiche (T₁ und T₂) ausgewertet werden.

11. Verfahren nach Anspruch 10,
dadurch gekennzeichnet,
dass für einen Bildwert (GW₆₅) eines Bildpixels (P₆₅) eines zu korrigierenden Teilbereichs (T₂), wobei der Bildpixel (P₆₅) an einer Grenze (G) zu einem Nachbarteilbereich (T₁) liegt, unter Verwendung des Bildwertes (GW₆₄) eines Bildpixels (P₆₄) des angrenzenden Bildgebiets (S₆₄) des Nachbarteilbereichs (T₁) ein Schätzwert (SW₆₅) ermittelt wird, und durch einen Vergleich des tatsächlichen Bildwerts (GW₆₅) des Bildpixels (P₆₅) mit dem Schätzwert (SW₆₅) ein Korrekturwert für den jeweiligen Bildwert (GW₆₅) in dem zu korrigierenden Teilbereich (T₂) ermittelt wird.

12. Verfahren nach Anspruch 10,
dadurch gekennzeichnet,
dass als Schätzwert der Bildwert eines unmittelbar angrenzenden Bildpixels des Nachbarteilbereichs verwendet wird.

13. Verfahren nach Anspruch 10,
dadurch gekennzeichnet,
dass zur Ermittlung des Schätzwerts (SW₆₅) die Bildwerte (GW₆₃, GW₆₄) von Bildpixeln (P₆₃, P₆₄) des angrenzenden Bildgebiets (S₆₃, S₆₄) des Nachbarteilbereichs (T₁) über die Grenze (G) hinweg extrapoliert werden.

14. Verfahren nach Anspruch 10,
dadurch gekennzeichnet,
dass für den Bildwert (GW₆₅) eines Bildpixels (P₆₅) des zu korrigierenden Teilbereichs (T₂) ein erster Korrekturwert gebildet wird und für einen unmittelbar an diesen Bildpixel (P₆₅) des zu korrigierenden Teilbereichs (T₂) angrenzenden Nachbarbildpixel (GW₆₄) des Nachbarteilbereichs (T₁) unter Verwendung von Bildwerten (GW₆₅, GW₆₆) des zu korrigierenden Teilbereichs (T₂) ein Schätzwert (SW₆₄) für den Nachbarbildpixel (P₆₅) ermittelt wird, und durch einen Vergleich dieses Schätzwerts (GW₆₄) mit dem tatsächlichen Bildwert (GW₆₄) des Nachbarbildpixels (P₆₄) ein zweiter Korrekturwert gebildet wird und aus dem ersten und dem zweiten Korrekturwert ein gemeinsamer Korrekturwert für den jeweiligen Bildwert (GW₆₅) des zu korrigierenden Teilbereichs (T₂) ermittelt wird.

15. Verfahren nach einem der Ansprüche 10 bis 14,
dadurch gekennzeichnet,
dass aus den Korrekturwerten für gleiche Bildwerte verschiedener Bildpixel des zu korrigierenden Teilbereichs ein gemeinsamer Korrekturwert für diesen Bildwert in dem zu korrigierenden Teilbereich gebildet wird.

16. Verfahren nach einem der Ansprüche 10 bis 15,
dadurch gekennzeichnet,
dass die Korrekturwerte für die Bildwerte der einzelnen Teilbereiche (T₁ bis T_{N}) in einer Anpassungstabelle (LUT) gespeichert und zur Korrektur aus dieser Anpassungstabelle (LUT) abgerufen werden.

17. Röntgenuntersuchungsgerät mit
einer Röntgenquelle um Röntgenstrahlen zu emittieren und ein Röntgenbild zu erzeugen einem Röntgendetektor, um ein optisches Bild aus dem Röntgenbild zu erhalten, der zeilen- und spaltenförmig angeordnete Sensorelemente enthält und dem wenigstens zwei Verstärker (V₁ bis V_{N}) zum Auslesen detektierter Bilddaten zugeordnet sind und jedem Teilbereich (T₁ bis T_{N}) wenigstens ein Verstärker zum Auslesen detektierter Bilddaten zugeordnet ist,
gekennzeichnet durch
eine Analyseeinheit (12) zur Erzeugung von Korrekturdaten, basierend auf der Auswertung von Bilddaten aneinandergrenzender Bildgebiete (S₆₃ bis S₆₆) benachbarter Teilbereiche (T₁ und T₂) und durch eine Korrektureinheit (13) zur Korrektur der mit Fehlern behafteten Bilddaten mittels der Korrekturdaten.

18. Computerprogramm zur Korrektur von Bilddaten eines aus mehreren Teilbereichen (T₁ bis T_{N}) zusammengesetzten Bildes, wobei Teilbereichen (T₁ bis T_{N}) des Bildes jeweils eine Ausleseeinheit (V₁ bis V_{N}) zugeordnet ist und Bilddaten von Bildgebieten (S₆₄ und S₆₅) aneinandergrenzender Teilbereiche (T₁ und T₂) benachbarter Ausleseeinheiten (V₁ und V₂) ausgewertet werden, um Korrekturdaten zu erzeugen, mittels der die Bilddaten des einen Teilgebietes (T₂) an die Verstärkercharakteristik der Ausleseeinheit (V₁), die das angrenzende Teilgebiet (T₁) verstärkt, angepasst werden.
